(19) Europäisches Patentamt
European Patent Office
Office européen des brevets

(11) Veröffentlichungsnummer: **0 218 132**
**B1**

(12) **EUROPÄISCHE PATENTSCHRIFT**

(45) Veröffentlichungstag der Patentschrift: **24.10.90**

(21) Anmeldenummer: **86112902.1**

(22) Anmeldetag: **18.09.86**

(51) Int. Cl.$^5$: **G 02 F 1/137,** C 09 K 19/02, C 09 K 19/58

(54) **Flüssigkristall-Phase mit eine Temperaturkompensation bewirkenden Dotierstoffen.**

(30) Priorität: **30.09.85 DE 3534777**

(43) Veröffentlichungstag der Anmeldung:
**15.04.87 Patentblatt 87/16**

(45) Bekanntmachung des Hinweises auf die Patenterteilung:
**24.10.90 Patentblatt 90/43**

(84) Benannte Vertragsstaaten:
**CH DE FR GB LI**

(56) Entgegenhaltungen:
**EP-A-0 136 725**
**EP-A-0 138 006**
**DE-A-2 827 471**
**DE-A-3 137 058**
**US-A-4 296 631**

(73) Patentinhaber: **HOECHST AKTIENGESELLSCHAFT**
**Postfach 80 03 20**
**D-6230 Frankfurt am Main 80 (DE)**

(72) Erfinder: **Heppke, Gerd, Prof. Dr.**
**Johann-Georg-Strasse 3**
**D-1000 Berlin 31 (DE)**
Erfinder: **Oestreicher, Feodor, Dr.**
**Zeppelinstrasse 40**
**D-1000 Berlin 20 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Die Kennlinien der in Flüssigkristall-Displays verwendeten elektro-optischen Effekte verändern sich im allgemeinen mit der Temperatur. Insbesondere bei einer Ansteuerung im Multiplexbetrieb ergeben sich daraus Schwierigkeiten, die zu einer unerwünschten Einschränkung des Arbeitstemperaturbereiches führen können. Bei verschiedenen elektrooptischen Effekten kann durch Zusatz chiraler Verbindungen zum nematischen Flüssigkristall über die Temperaturfunktion der Ganghöhe der dadurch induzierten cholesterischen Helixstruktur die Temperaturabhängigkeit der elektrooptischen Kennlinien vorteilhaft beeinflußt werden, so beim cholesterisch-nematischen Phasenumwandlungseffekt, der TN ("twisted nematic")-Zelle und dem kürzlich vorgestellten SBE ("supertwisted birefringence effect"). Die meisten der bekannten chiralen Dotierstoffe induzieren in nematischen Phasen eine mit zunehmender Temperatur ansteigende Ganghöhe, während für die gewünschte Temperaturkompensation eine mehr oder weniger starke Abnahme der Ganghöhe gefordert wird.

Aus der DE—C—28 27 471 (= US—A—4 264 148) ist der Zusatz von zwei unterschiedlichen chiralen Dotierstoffen zu nematischen Trägersubstanzen bekannt; dabei erzeugt der eine chirale Dotierstoff in der nematischen Trägersubstanz eine rechtshändige Verdrillung der andere eine linkshändige Verdrillung. Mit einer solchen Dotierung wird zwar bereits eine Abnahme der Ganghöhe erreicht, aber es sind zur Erreichung dieses Effekts relativ hohe Gesamtkonzentrationen erforderlich, die zu einer negativen Beeinflussung der anderen Materialparameter führen können.

Aufgabe der vorliegenden Erfindung ist es deshalb, eine solche Dotierung von Flüssigkristallen zu erreichen, die einerseits die Optimierung der Temperaturkompensation vereinfacht, andererseits aber auch eine geringere Gesamteinwaage der Dotierstoffe erfordert.

Die Erfindung geht aus von einer bekannten verdrillbaren Flüssigkristall-Phase mit einem Gehalt an mindestens zwei chiralen Verbindungen. Die erfindungsgemäße Flüssigkristall-Phase ist gekennzeichnet durch die Merkmale des Anspruchs 1.

Unter dem Begriff "verdrillbare Flüssigkristall-Phase" sind nematische, cholesterische, geneigt ("tilted")-smektische, insbesondere smektisch C ($S_c$ oder SmC), Phasen zu verstehen. Die Verbindungen mit "Helixinversion" zeichnen sich dadurch aus, daß sich bei einer bestimmten Inversionstemperatur die Händigkeit der Verdrillung verändert, wobei im vorliegenden Fall diese Inversionstemperatur zwischen dem Erstarrungspunkt und dem Klärpunkt der jeweiligen Flüssigkristallphase liegt; bei Verwendung handelsüblicher Flüssigkristallphasen bedeutet dies einen Temperaturbereich von insbesondere −40°C bis +200°C, bevorzugt −20°C bis +140°C.

Die zweite Gruppe von chiralen Verbindungen weist eine hohes Verdrillungsvermögen auf, d.h. das Produkt $p \cdot c$ ($p$ = Ganghöhe der induzierten Helixstruktur im µm, $c$ = Konzentration des chiralen Dotierstoffes in Gew.-%), das dem Reziprokwert des Verdrillungsvermögens entspricht, ist kleiner als 8, insbesondere liegt es zwischen 0,5 und 6. In einer bevorzugten Ausführungsform weist diese zweite Gruppe von chiralen Verbindungen auch noch eine bei Temperaturveränderung im wesentlichen unabhängige Ganghöhe auf, d.h. die im allgemeinen im Bereich von 1% bis 1‰ pro K liegende Zunahme der Ganghöhe liegt bei diesen Verbindungen insbesondere bei weniger als 3‰.

Mit Hilfe der speziellen erfindungsgemäßen Kombination von chiralen Dotierstoffen gelingt es, ein Verdrillungsvermögen bei vergleichbarer Temperaturfunktion der Ganghöhe zu erzielen, das (siehe auch Beispiele und Vergleichsbeispiel weiter unten) etwa — verglichen mit einer Standarddotierung aus dem Stand der Technik — um mindestens den Faktor 3 bis 4 größer ist. Durch diese mengenmäßig geringere Dotierung kann erreicht werden, daß die sonstigen Parameter (Materialeigenschaften) der zugrundeliegenden verdrillbaren Flüssigkristall-Phasen weniger stark beeinflußt werden.

Die erfindungsgemäßen verdrillbaren Flüssigkristallphasen bestehen aus 3 bis 28, vorzugsweise 3 bis 15 Komponenten, darunter mindestens je eine der erfindungsgemäß beanspruchten chiralen Dotierstoffe. Die anderen Bestandteile werden vorzugsweise ausgewählt aus den bekannten Verbindungen mit nematischen, cholesterischen und/oder geneigt — smektischen Phasen, dazu gehören beispielsweise Schiffsche Basen, Biphenyle, Terphenyle, Phenylcyclohexane, Cyclohexylbiphenyle, Pyrimidine, Zimtsäureester, Cholesterinester, verschieden überbrückte, terminal-polare mehrkernige Ester von p-Alkylbenzoesäuren. Im allgemeinen liegen die im Handel erhältlichen Flüssigkristall-Phasen bereits vor der Zugabe der chiralen Dotierstoffe als Gemische verschiedenster Komponenten vor, von denen mindestens eine mesogen ist, d.h. als Verbindung, in derivatisierter Form oder im Gemisch mit bestimmten Cokomponenten eine Flüssigkristall-Phase zeigt [= mindestens eine enantiotrope (Klärtemperatur > Schmelztemperatur) oder monotrope (Klärtemperatur < Schmelztemperatur) Mesophasenbildung erwarten läßt].

Zu den chiralen Dotierstoffen mit Helixinversion zählen insbesondere die Diester von mesogenen Carbonsäuren und dem chiralen Butandiol-(2,3) oder dem chiralen Propandiol-(2,3), wobei die chiralen Zentren an den C-Atomen 2 und 3 gegebenenfalls auch durch eine Alkylengruppe (insbesondere von $C_1$ bis $C_4$) unterbrochen sein können (siehe beispielsweise DE—A—33 33 677). Beispiele für geeignete Verbindungen mit Helixinversion sind:

2,3-Bis-[4-(trans-4-n-pentyl-cyclohexyl)-benzoyloxy]-butan,
2,3-Bis-[4-(trans-4-n-heptyl-cyclohexyl)-benzoyloxy]-butan,
2,3-Bis-[4-(4-n-hexyloxy-benzoyloxy)-benzoyloxy]-butan,
2,3-Bis-(4'-trans-n-pentyl-cyclohexyl-4-diphenyl-carbonyloxy)-butan,

2,3-Bis-(4'-trans-n-pentyl-4-trans-dicyclohexyl-carbonyloxy)-butan,
2,3-Bis-[4-(4-n-hexyloxy-benzoyloxy)-benzoyloxy]-propan
2,3-Bis-[4-(trans-4-n-heptyl-cyclohexyl)-benzoyloxy]-propan
2,3-Bis-(4'-trans-n-pentyl-4-trans-dicyclohexyl-carbonyloxy)-propan

Zu den chiralen Verbindungen mit hohem Verdrillungsvermögen zählen neben den bereits bekannten chiralen Dotierstoffen wie 4,4'-Diphenyldicarbonsäuredioctylester, Alkoxybenzoyloxybenzoesäureoctylester oder Diester mesogener Carbonsäuren und 1-Phenylethandiol-(1,2) insbesondere die in der prioritätsgleichen Patentanmeldung mit dem Titel "Chirale Ester mesogener Carbonsäuren, ein Verfahren zu deren Herstellung und ihre Verwendung als Dotierstoff in Flüssigkristall-Phasen" (= DE—A—35 34 778) beschriebenen Ester von mesogenen Mono- oder Dicarbonsäuren und chiralen 1-aryl-, -cycloalkyl- oder/-heteroaryl-substituierten und 1-alkylsubstituierten Methanolen. Beispiele für diese letztgenannten Verbindungen sind:

4-(trans-4-n-Heptyl-cyclohexyl)-benzoesäureester des 1-Phenylethanols-(1),
4-(4-n-Hexyloxy-benzoyloxy)-benzoesäureester des 1-Phenylethanols-(1),
4'-n-Pentyl-4-diphenylcarbonsäureester des 1-Phenylethanols-(1),
4-(trans-4-n-Heptyl-cyclohexyl)-benzoesäureester des 1-(9'-Anthryl)-2,2,2-trifluorethanols-(1),
4'-n-Pentyl-4-diphenylcarbonsäureester des 1-(9'-Anthryl)-2,2,2-trifluorethanols-(1),
4,4'-Diphenyldicarbonsäurediester des 1-(9'-Anthryl)-2,2,2-trifluorethanols-(1),
4-(trans-4-n-Heptyl-cyclohexyl)-benzoesäureester des 1-Phenyl-2,2,2-trifluorethanols-(1).

Ebenso geeignet für diese zweite Art von chiralen Dotierstoffen sind die in der prioritätsgleichen Patentanmeldung mit dem Titel "Chirale Ester mesogener Carbonsäuren und zweiwertiger Alkohole, ein Verfahren zu deren Herstellung und ihre Verwendung als Dotierstoff in Flüssigkristall-Phasen" (= DE—A—35 34 779) beschriebenen Ester von mesogenen Carbonsäuren und dem 1,2-Diphenyl-ethandiol-(1,2) wie 1,2-Bis-[4-(trans-4-n-heptyl-cyclohexyl)-benzoyloxy]-1,2-diphenyl-ethan oder 1,2-Bis-(4'-n-pentyl-4-diphenylcarbonyloxy)-1,2-diphenyl-ethan oder auch die in der prioritätsgleichen Patentanmeldung mit dem Titel "Chirale Phenolester mesogener Carbonsäuren, ein Verfahren zu deren Herstellung und ihre Verwendung als Dotierstoff in Flüssigkristall-Phasen" (= DE—A—35 34 780) beschriebenen Phenolester von 1,1'-Bi-2-naphthol und mesogenen Carbonsäuren wie 1,1'-Bi-2-naphtholdiester der 4-(4-trans-4-n-Heptyl-cyclohexyl)-benzoesäure oder der 4'-n-Pentyl-4-diphenylcarbonsäure.

Von den beiden Arten der erfindungsgemäß zugesetzten chiralen Dotierstoffe enthalten die Flüssigkristall-Phasen im allgemeinen 0,01 bis 70 Gew.-%, insbesondere 0,05 bis 50 Gew.-%. Das Gewichtsverhältnis der Verbindung(en) mit Helixinversion zu der (denen) mit hohem Verdrillungsvermögen liegt zweckmäßig bei 50:1 bis 1:50, insbesondere bei 7:1 bis 1:30.

## Beispiele und Vergleichsbeispiel

Zu einer handelsüblichen nematischen Weitbereichsmischung — "RO-TN 404" der Hoffman-La Roche Aktiengesellschaft (Basel/Schweiz) — mit einem Klärpunkt von 104°C wird ein Gemisch der folgenden beiden chiralen Substanzen zugegeben:

(I) 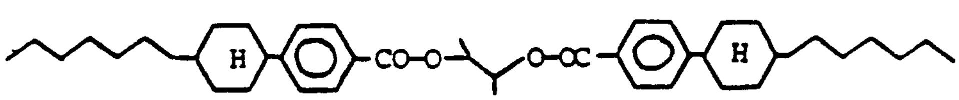

(II) 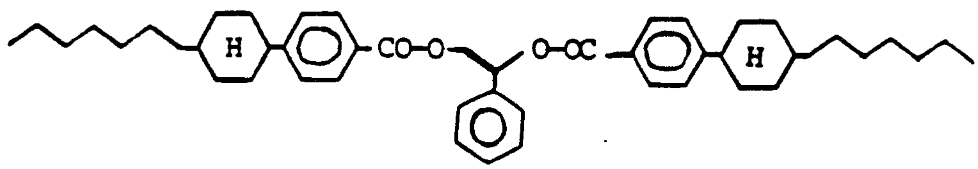

Von der Substanz (I), einer chiralen Verbindung mit Helixinversion bei einer Inversionstemperatur von 62°C, sind 0,6 Gew.-% und von der Substanz (II), einer chiralen Verbindung mit hohem Verdrillungsvermögen (p·c = 3,69 µ·Gew.-%) und mit bei Temperaturveränderung im wesentlichen unabhängiger Ganghöhe (<1‰ pro K), 0,4 Gew/-% in der dotierten Flüssigkristall-Phase vorhanden. Die dotierte Flüssigkristall-Phase weist bei 25°C ein p·c Produkt von 15,5 µm·Gew.-% und über den gesamten Arbeitsbereich (zwischen Erstarrungspunkt und Klärpunkt) eine Abnahme der Ganghöhe von −0,38% pro K auf. Wird anstelle der Substanzen (I) und (II) ein aus der DE—C—28 27 471 (siehe Einleitung) bekanntes Gemisch aus 0,52 Gew.-% der chiralen Verbindung (III) und 0,48 Gew.-% der chiralen Verbindung (IV):

(III) 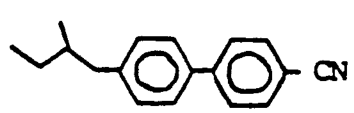

(p·c= 13 µm · Gew.-%
4‰ pro K)

(IV)

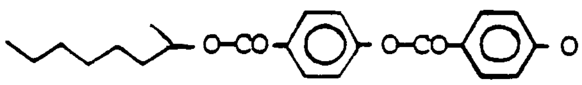

(p·c=8,5 µm·Gew.-% 2‰ pro K)

zugesetzt, so betragen das p·c Produkt 50,0 µm·Gew.-% und die Abnahme der Ganghöhe −0,35% pro K. Zur Erzeugung einer Verdrillung von 2 µm (typisch für den cholesterisch-nematischen Phasenumwandlungseffekt) in einer geeigneten Flüssigkristall-Phase werden von der erfindungsgemäßen Dotier-Mischung 7,8 Gew.-%, von der Dotier-Mischung aus dem Stand der Technik 25 Gew.-% benötigt.

Für TN-Zellen im Multiplexbetrieb werden bei vergleichbaren Eigenschaften von dem erfindungsgemäßen Dotier-Gemisch 0,8 Gew.-% benötigt und von einer bekannten Mischung aus dem Stand der Technik [Verbindung (III) und Cholesterylchlorid] 4 Gew.-%. Zu vergleichbaren Ergebnissen kommt man auch, wenn man anstelle der Verbindung (I) eines der folgenden Butan- oder Propanderivate einsetzt (in Klammern jeweils die Inversionstemperatur in °C):

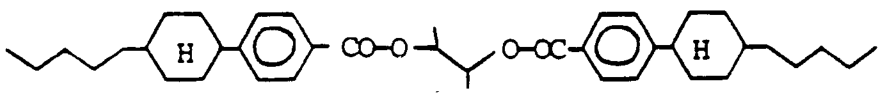

(62)

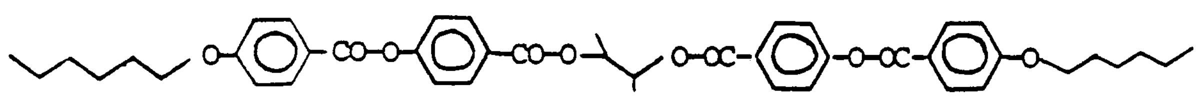

(52)

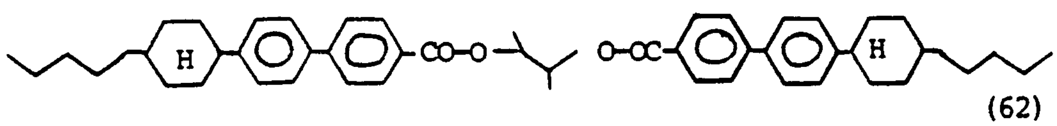

(62)

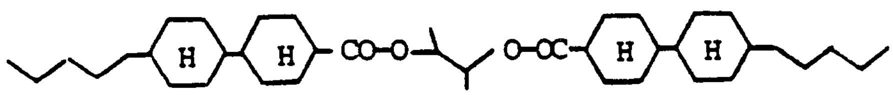

(−5)

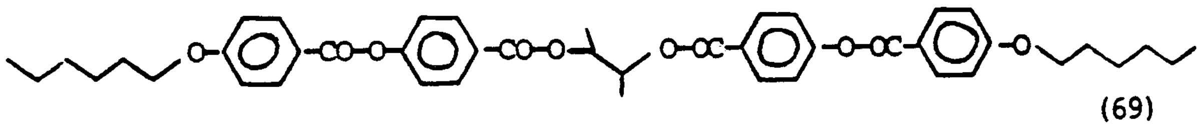

(69)

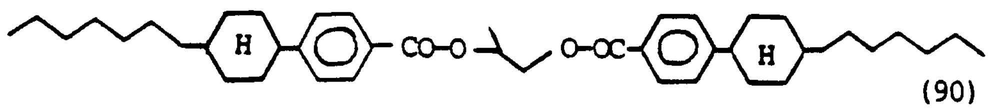

(90)

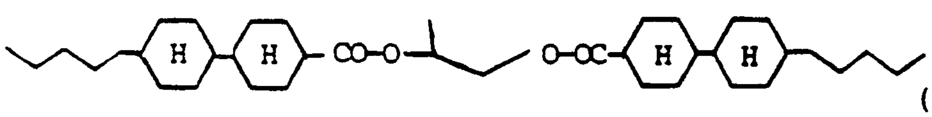

(70)

oder anstelle der Verbindung (II) die Verbindung (IV) oder eine der folgenden Verbindungen (in Klammern jeweils das p·c Produkt in µm·Gew.-% und die Temperaturveränderung der Ganghöhe in ‰):

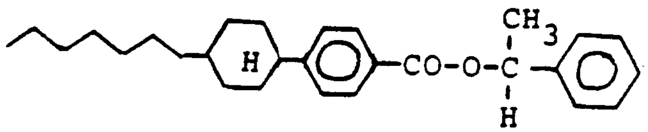

(5,5 / 1‰ )

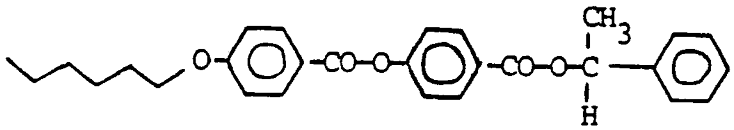

(6,2 /< 1‰ )

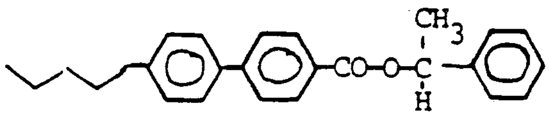

(5,1 /<< 1‰ )

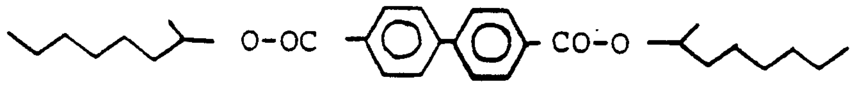

(5,6 / 5 ‰ )

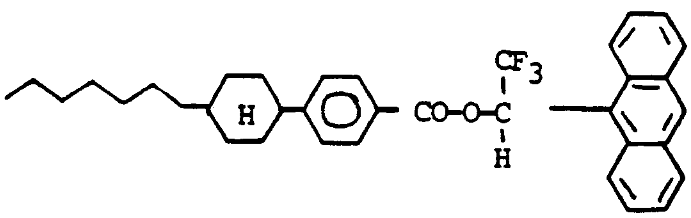

(2,1 / 1 ‰ )

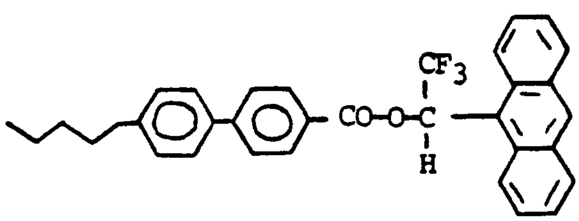

(1,85 /< 1‰ )

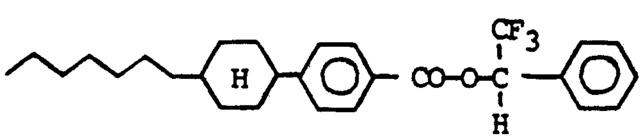

(4,6 / 1‰ )

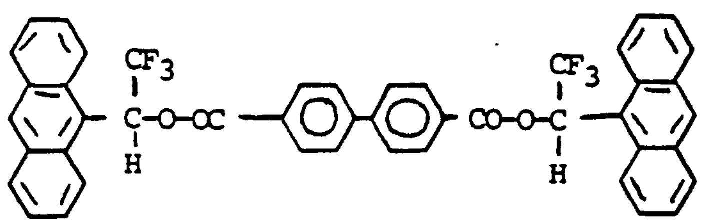

(9 / 1‰ )

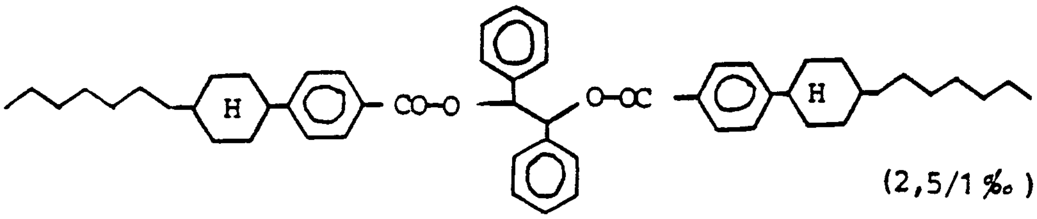

(2,5/1 ‰)

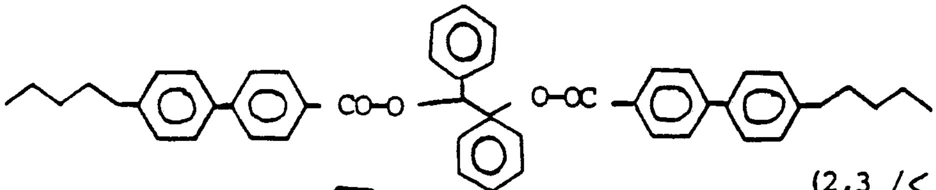

(2,3 /<1 ‰)

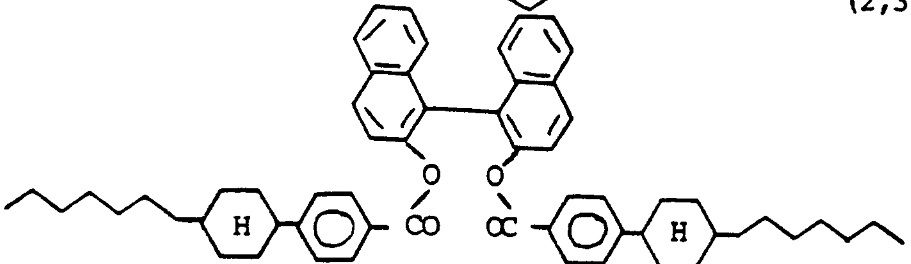

(1,95/<1 ‰)

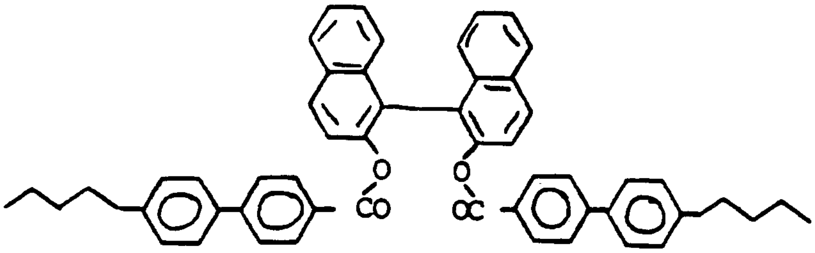

(1,50/<1 ‰)

## Patentansprüche

1. Verdrillbare Flüssigkristallphase mit einem Gehalt an mindestens einer chiralen Verbindung mit Helixinversion und mindestens einer weiteren chiralen Verbindung mit hohem Verdrillungsvermögen, dadurch gekennzeichnet, daß sie als chirale Verbindung mit Helixinversion Ester von mesogenen Carbonsäuren und dem chiralen Butandiol-(2,3) und/oder Propandiol-(2,3) enthält, wobei die chiralen Zentren an den C-Atomen 2 und 3 gegebenenfalls auch durch eine Alkylengruppe unterbrochen sein können, daß die chirale Verbindung mit hohem Verdrillungsvermögen ein Produkt (p·c) von <8 µm·Gew.-% aufweist und daß das Gewichtsverhältnis der Verbindung(en) mit Helixinversion zu der (denen) mit hohem Verdrillungsvermögen bei 50:1 bis 1:50 liegt.

2. Flüssigkristallphase nach Anspruch 1, dadurch gekennzeichnet, daß sie 0,01 bis 70 Gew.-% an den chiralen Verbindungen enthält.

3. Flüssigkristallanzeigeelement, enthaltend eine Flüssigkristallphase nach Anspruch 1.

4. Verfahren zur Temperaturkompensation in Flüssigkristallanzeigeelementen, dadurch gekennzeichnet, daß die Flüssigkristallphase gemäß Anspruch 2 verwendet wird.

## Revendications

1. Phase mésomorphe torsadable, contenant au moins un composé chiral avec inversion de l'hélice et au moins un autre composé chiral à pouvoir élevé de torsion, caractérisée en ce qu'elle contient comme composé chiral avec inversion de l'hélice un ester d'acides carboxyliques mésogènes et du butanediol-2,3 et/ou du propanediol-2,3 chiral, les centres chiraux pouvant aussi, au niveau des atomes de carbone 2 et 3, être éventuellement interrompus par un groupe alkylène; que le composé chiral ayant un pouvoir de torsion élevé présente un produit (p·c) <8 µm.% en poids; et que le rapport pondéral entre le ou les composés à inversion de l'hélice et le ou les composés à pouvoir élevé de torsion est compris entre 50:1 et 1:50.

2. Phase mésomorphe selon la revendication 1, caractérisée en ce qu'elle contient de 0,01 à 70% en poids des composés chiraux.

3. Elément d'affichage à cristaux liquides contenant une phase mésomorphe selon la revendication 1.

4. Procédé de compensation des températures dans des éléments d'affichage à cristaux liquides, caractérisé en ce qu'on utilise la phase mésomorphe selon la revendication 2.

**Claims**

1. A twistable liquid crystal phase containing at least one chiral compound exhibiting helix inversion and at least one further chiral compound having a high twisting capacity, which contains, as the chiral compound exhibiting helix inversion, esters of mesogenic carboxylic acids and the chiral compound butane-2,3-diol and/or propane-2,3-diol, where the chiral centers at the carbon atoms 2 and 3 may furthermore be interrupted by an alkylene group, wherein the chiral compound having a high twisting capacity has a product (p·c) of <8 μm·% by weight and wherein the weight ratio of the compound(s) exhibiting helix inversion to that (those) having a high twisting capacity is 50:1 to 1:50.

2. A liquid crystal phase as claimed in claim 1, which contains 0.01 to 70% by weight of chiral compounds.

3. A liquid crystal display element containing a liquid crystal phase as claimed in claim 1.

4. A method for temperature compensation in liquid crystal display elements, wherein the liquid crystal phase as claimed in claim 2 is used.